# EUROPEAN PATENT SPECIFICATION

(11) **EP 2 653 563 B1**
(45) Date of publication and mention of the grant of the patent: **28.11.2018**
(21) Application number: 11856085.3
(22) Date of filing: 15.07.2011
(51) Int. Cl.: C21B 5/00, C21B 7/00, C21B 5/06, C21B 7/16

(54) **METHOD FOR OPERATING BLAST FURNACE**
BETRIEBSVERFAHREN FÜR EINEN VERBRENNUNGSOFEN
MÉTHODE D'EXPLOITATION D'UN HAUT FOURNEAU

(30) Priority: 18.01.2011 JP 2011007953; 18.01.2011 JP 2011007954; 08.07.2011 JP 2011152079
(43) Date of publication of application: 23.10.2013
(73) Proprietor: JFE Steel Corporation, Tokyo 100-0011 (JP)
(72) Inventor: FUJIWARA, Daiki, Tokyo 100-0011 (JP); MURAO, Akinori, Tokyo 100-0011 (JP); WATAKABE, Shiro, Tokyo 100-0011 (JP); KITAHARA, Masayuki, Tokyo 100-0011 (JP)
(74) Representative: Hoffmann Eitle
(86) International application number: PCT/JP2011/066771
(87) International publication number: WO 2012/098713

(56) References cited:
- WO-A1-2006/080563
- JP-A- 5 179 323
- JP-A- 62 142 706
- JP-A- 62 142 706
- JP-A- 62 238 307
- JP-A- 2006 152 434
- JP-A- 2006 152 434
- JP-A- 2006 233 332
- JP-A- 2006 312 757

## Description

### [Technical Field]

The present invention relates to a method for operating a blast furnace in which the combustion temperature is increased by injecting solid reducing agents such as pulverized coal and inflammable reducing agents such as an LNG (Liquefied Natural Gas) and a utility gas into the blast furnace through tuyeres thereof in order to improve productivity and decrease the specific consumption of reducing agents.

### [Background Art]

Nowadays, since there is a problem of global warming due to an increase in the amount of emitted carbon dioxide, it is an important problem also for the steel making industry to suppress the emission of CO₂. In view of this situation, in recent operation of blast furnaces, operation with a low reducing agent rate (RAR: the abbreviation of Reducing Agent Rate which means the total amount required to produce 1 ton of pig iron of reducing agents which are injected into a blast furnace through tuyeres and coke charged through the furnace top) is being strongly promoted. Since, as reducing agents in a blast furnace, coke which is a solid reducing agent charged through the furnace top and pulverized coal which is a solid reducing agent injected into the furnace through tuyeres are mainly used, it is an effective measure to replace the solid reducing agents such as coke and pulverized coal with reducing agents having a high hydrogen content such as waste plastic, a utility gas and crude oil in order to achieve not only a low reducing agent rate but also the suppression of the emission of carbon dioxide. Patent Literature 1 described below proposes a method in which a double tube is used as a lance with which reducing agents are injected through a tuyere and in which an LNG is injected through the inner tube of the double tube lance and pulverized coal is injected through the outer tube of the double tube lance. In addition, Patent Literature 2 described below proposes a method in which a double tube is similarly used as a lance with which reducing agents are injected through a tuyere and in which pulverized coal is injected through the inner tube of the double tube lance and an LNG is injected through the outer tube of the double tube lance.

### [Citation List]

### [Patent Literature]

[PTL 1] Japanese Unexamined Patent Application Publication No. 3176680
[PTL 2] Japanese Examined Patent Application Publication No. 1-29847

Further related prior art may be found in the WO 2006/080563 A1 being directed to a method for operating a blast furnace.

### [Summary of Invention]

### [Technical Problem]

Although the methods for operating a blast furnace according to Patent Literatures 1 and 2 are more effective for improving combustion temperature and for the reduction of the specific consumption of reducing agents than a conventional method in which only pulverized coal is injected through tuyeres, there is room for further improvement.

The present invention has been completed in view of the problems described above, and an object of the present invention is to provide a method for operating a blast furnace in which further improvement in the combustion temperature and further reduction of the specific consumption of reducing agents are possible.

### [Solution to Problem]

The present invention is defined by the appended independent claim. The dependent claims describe optional features and preferred embodiments.

In order to solve the problems described above, the present invention provides a method for operating a blast furnace in which an inflammable or combustible reducing agent and a solid reducing agent are injected through a lance and a tuyere, the method including injecting the inflammable or combustible reducing agent and the solid reducing agent through a double tube lance(which is mentioned as a double wall lance), setting the flow velocity at the exit of the outer tube of the double tube lance to be from 20 m/sec to 120 m/sec and setting the oxygen excess ratio of air blown to a tuyere to be from 0.7 to 1.3.

In the method for operating a blast furnace described above, it is preferable that the solid reducing agent be injected through the inner tube of the double tube lance and that the inflammable reducing agent is injected through the outer tube of the double tube lance.

In addition, in the method for operating a blast furnace described above, it is preferable that the inflammable reducing agent be injected through the inner tube of the double tube lance and that the solid reducing agent is injected through the outer tube of the double tube lance.

It is preferable that pulverized coal be used as the solid reducing agent.

In the method for operating a blast furnace described above, it is preferable that the solid reducing agent be injected into the blast furnace in an amount in the range from 50 kg to 300 kg per 1 ton of pig iron. It is more preferable that the solid reducing agent be injected into the blast furnace in an amount in the range from 60 kg to 180 kg per 1 ton of pig iron.

In the method for operating a blast furnace described above, it is preferable that the pulverized coal which is used as a solid reducing agent be mixed with waste plastic, a refuse derived fuel, an organic resource or a waste material.

In addition, it is preferable that the pulverized coal which is a solid reducing agent be mixed with waste plastic, a refuse derived fuel, an organic resource or a waste material with the content of the pulverized coal being 80 mass% or more.

In addition, it is preferable that a utility gas, a natural gas, propane gas, hydrogen, a converter gas, a blast furnace gas or a coke oven gas be used as the inflammable reducing agent.

In addition, it is preferable that the inflammable reducing agent be injected into the blast furnace in an amount in the range from 1 kg to 50 kg per 1 ton of pig iron. It is more preferable that the inflammable reducing agent be injected into the blast furnace in an amount in the range from 10 kg to 35 kg per 1 ton of pig iron.

### [Advantageous Effects of Invention]

As described above, according to the method for operating a blast furnace of the present invention, since the inflammable reducing agent which, in first, contacts O₂ contained in the blown air is burnt, the temperature of the solid reducing agent which exists on the inner side of the inflammable reducing agent is significantly increased, which results in an increase in the heating rate of the solid reducing agent, and, at the same time, the solid reducing agent is sufficiently burnt by setting the oxygen excess ratio of the air blown to a tuyere to be from 0.7 to 1.3, which results in a significant increase in combustion temperature, which makes it possible to decrease the specific consumption of the reducing agents, while the deformation of the double tube lance due to an increased temperature can be avoided by setting the flow velocity at the exit of the outer tube of the double tube lance to be from 20 m/sec to 120 m/sec.

### [Brief Description of Drawings]

[Fig. 1] Fig. 1 is the vertical cross-sectional view of a blast furnace illustrating one of the embodiments of the blast furnace to which the method for operating a blast furnace of the present invention is applied.
[Fig. 2] Fig. 2 is a diagram illustrating combustion state in the case where only pulverized coal is injected through the lance in Fig. 1.
[Fig. 3] Fig. 3 is a diagram illustrating the combustion mechanism of the pulverized coal in Fig. 2.
[Fig. 4] Fig. 4 is a diagram illustrating the combustion mechanism in the case where pulverized coal and a utility gas are injected into the blast furnace.
[Fig. 5] Fig. 5 is a diagram illustrating a combustion test apparatus.
[Fig. 6] Fig. 6 is a diagram illustrating the results of the combustion tests.
[Fig. 7] Fig. 7 is a diagram illustrating the combustion temperature in the case where an oxygen excess ratio is changed.
[Fig. 8] Fig. 8 is a diagram illustrating the water jacket of a double tube lance.
[Fig. 9] Fig. 9 is a diagram illustrating the water jacket of a double tube lance.
[Fig. 10] Fig. 10 is a diagram illustrating the relationship between the flow rate of the gas which is injected through the outer tube of the double tube lance and the temperature of the surface of the lance.

### [Description of Embodiments]

Subsequently, one of the embodiments of the method for operating a blast furnace of the present invention will be described in reference to the figures.

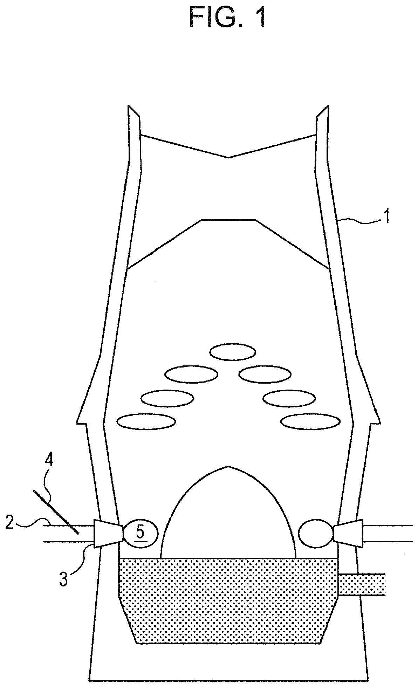

Fig. 1 is the general view of a blast furnace to which the method for operating a blast furnace according to the present embodiment is applied. As the figure illustrates, a blow pipe 2 through which hot air is blown is connected to a tuyere 3 of a blast furnace 1, and a lance 4 is installed so that the lance penetrates through the blow pipe 2. There is a combustion space which is called a raceway 5 in a coke heaped layer which exists at the end of the line in the direction in which the hot air is blown through the tuyere 3, and the combustion and gasification of reducing agents take place mainly in this combustion space.

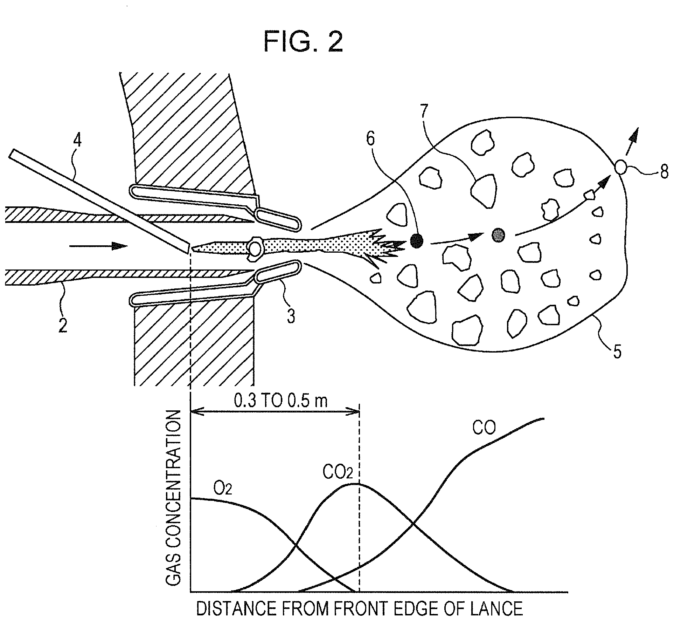

Fig. 2 illustrates combustion state in the case where only pulverized coal 6 which is used as a solid reducing agent is injected through the lance 4. The fixed carbon and the volatile matter of the pulverized coal 6 which is transferred through the lance 4 and the tuyere 3 into the raceway 5 burn with coke 7, and the aggregate of carbon and ash material which is left unburnt and generally called char is discharged from the raceway as unburnt char 8. Since the velocity of the hot air blown through the tuyere 3 at the end of the line in the direction in which the hot air is blown is about 200 m/sec and it is generally believed that the area in which O₂ exists within the area from the front edge of the lance 4 to the inside of the raceway 5 is about from 0.3 m to 0.5 m, it is necessary to improve the heating rate and the contact efficiency (diffusivity) with O₂ of the particles of pulverized coal at a level of substantially 1/1000 second. Incidentally, the mean particle diameter of the pulverized coal which is injected into the blast furnace in practice is from 10 µm to 100 µm.

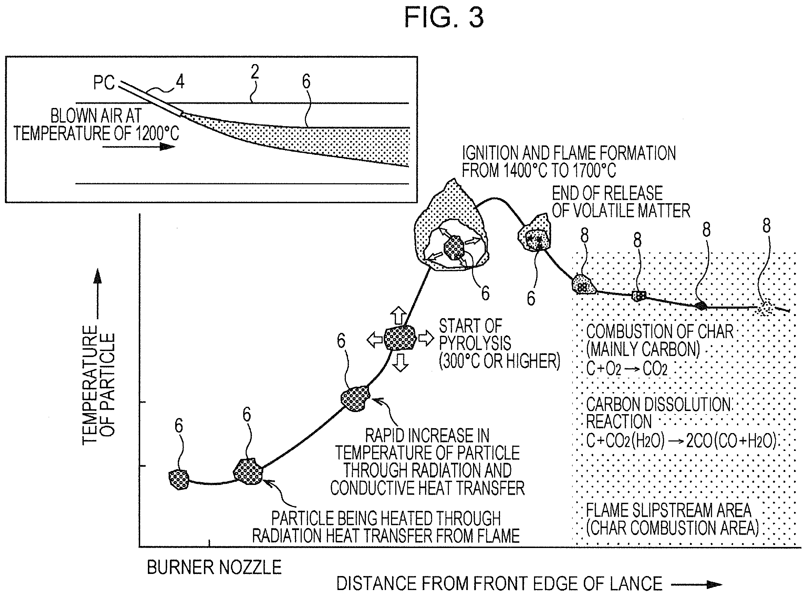

Fig. 3 illustrates the combustion mechanism in the case where only pulverized coal (represented by PC in the figure) 6 is injected through the lance 4 into the blow pipe 2. The particles of the pulverized coal 6 which is injected through the tuyere 3 into the raceway 5 are heated up through radiation heat transfer from flames in the raceway 5, the temperature of the particles is rapidly increased through radiation heat transfer and conductive heat transfer, the pyrolysis of the particles starts at the time when the temperature of the particles becomes 300°C or higher, flames are formed due to the ignition of volatile matter, and the combustion temperature reaches from 1400°C to 1700°C. The particle from which the volatile matter has been released become the char 8 described above. Since the char 8 mainly consists of fixed carbon, a reaction which is called a carbon dissolution reaction occurs as well as combustion a reaction.

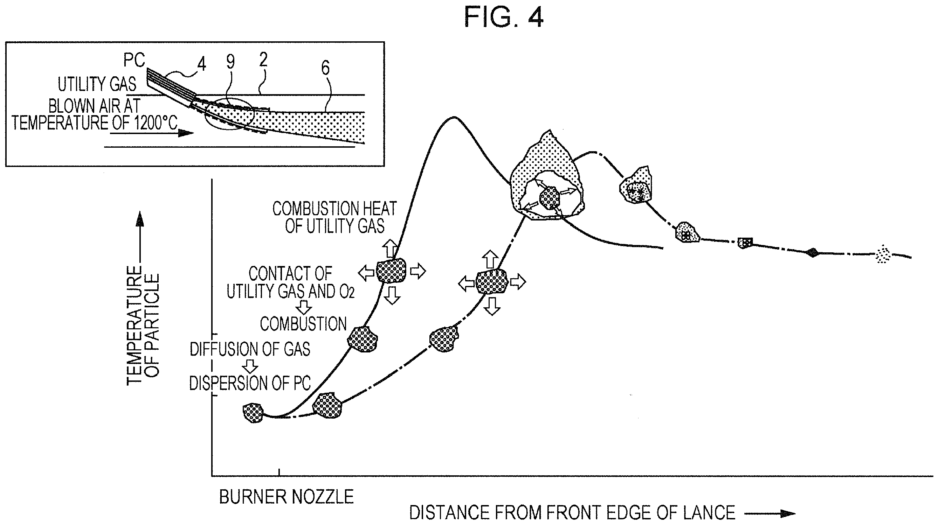

Fig. 4 illustrates the combustion mechanism in the case where a utility gas 9 which is used as an inflammable reducing agent with pulverized coal (represented by PC in the figure) 6 is injected through the lance 4 into the blow pipe 2. The utility gas 9 consists mainly of methane and additionally of ethane, propane, butane and the like. The examples of the composition of a utility gas are given in Table 1 below. The case where the pulverized coal 6 and the utility gas 9 are injected simply in parallel with each other is illustrated in the figure. Here, the dashed line in the figure represents, for reference, the combustion temperature in the case where only pulverized coal is injected as illustrated in Fig. 3. In the case where pulverized coal and a utility gas are injected at the same time as described above, it is thought that utility gas which is a gaseous matter preferentially burns, and pulverized coal is rapidly heated by the combustion heat of the burning utility gas and the temperature of the pulverized coal rapidly increases, which results in there being a further increase in combustion temperature at positions near to the lance.

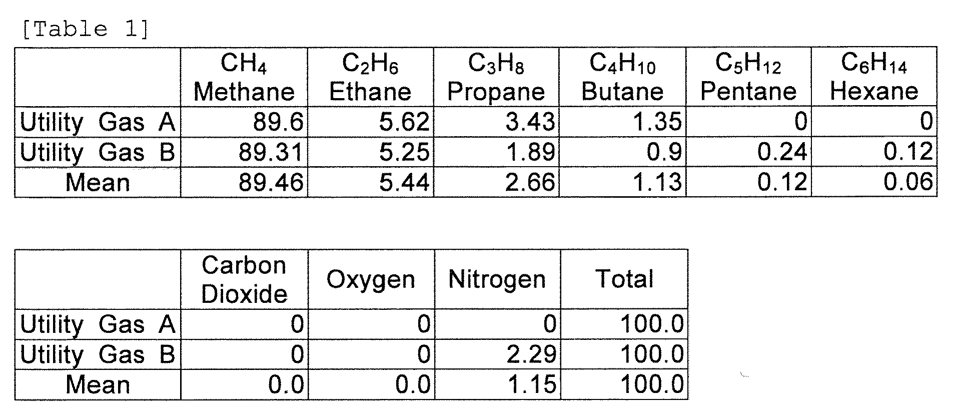

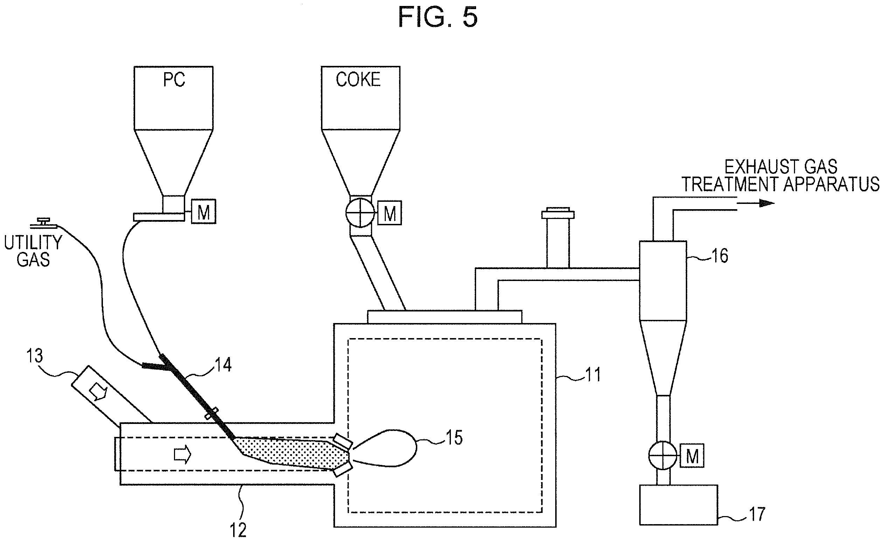

On the basis of the knowledge described above, combustion tests were carried out using a combustion test apparatus illustrated in Fig. 5. Coke was packed in a test furnace 11 in order to simulate conditions in a blast furnace, the inside of a raceway 15 could be observed through an observation window. A lance 14 was inserted into a blow pipe 12, through which hot air which was generated by using a combustion burner 13 could be blown into the test furnace 11 at a specified blow rate. In addition, it was possible to adjust the amount of oxygen added to the blown air with this blow pipe 12. Any one of the pulverized coal and the utility gas or both of them could be injected into the blow pipe 12 through the lance 14. An exhaust gas which was generated in the test furnace 11 was separated into an exhaust gas and dust by using a separating apparatus 16 called a cyclone, and the exhaust gas was transferred to an exhaust gas treatment apparatus such as an auxiliary combustion furnace and the dust was collected in a collection box 17.

The combustion tests were carried out by using a single tube lance and a double tube lance as a lance 4, and the combustion temperature, the combustion position, the combustion state of unburnt char and diffusivity were observed through the observation window by using a two-color thermometer in the case where only pulverized coal was injected through a single tube lance, in the case where, by using a double tube lance, pulverized coal was injected through the inner tube of the double tube lance while a utility gas which was used as an inflammable reducing agent was injected through the outer tube of the double tube lance, in the case where a utility gas which was used as an inflammable reducing agent was injected through the inner tube of the double tube lance while pulverized coal was injected through the outer tube of the double tube lance. A two-color thermometer is, as well known, a radiation thermometer with which temperature is observed through use of thermal radiation (the transfer of an electromagnetic wave from a body of a high temperature to a body of a low temperature), one of wavelength distribution meters with which a temperature is derived by observing the change in wavelength distribution with a temperature focusing on the fact that the wavelength distribution shifts to the side of the shorter wavelength with an increase in temperature, and, in particular, a thermometer with which a temperature is determined by the ratio of the observed radiation energies corresponding to two wavelengths in order to detect a wavelength distribution. The combustion state of unburnt char was evaluated by observing the porosity of char which had been collected with a probe at the positions 150 mm and 300 mm from the front edge of the lance 14 in the blow pipe 12 of the test furnace 11, embedded in resin, polished and subjected to image analysis.

The specifications of the pulverized coal were as follows: fixed carbon (FC: Fixed Carbon); 77.8%, volatile matter (VM: volatile Matter); 13.6%, ash material (Ash); 8.6% and injecting condition; 29.8 kg/h (corresponding to 100 kg per 1 ton of pig iron). In addition, the injecting condition of the utility gas was 3.6 kg/h (5 Nm³/h, corresponding to 10 kg per 1 ton of pig iron). The blowing conditions of the hot air were as follows: blown air temperature; 1200°C, flow rate; 300 Nm³/h, flow velocity; 70 m/s and amount of O₂ added; +5.5 (oxygen concentration; 26.5%, that is, increasing oxygen concentration by 5.5% from the oxygen concentration in the air of 21%). N₂ was used as the carrier gas of the pulverized coal. Incidentally, the solid-gas ratio of pulverized coal and a carrier gas which carries the pulverized coal was from 10 kg/Nm³ to 25 kg/Nm³ in the case of a method in which powder, that is, the pulverized coal was transferred with a small amount of the gas (dense-phase conveying) and from 5 kg/Nm³ to 10 kg/Nm³ in the case of a method in which the pulverized coal was transferred with a large amount of the gas (dilute-phase conveying). Air may be used as a carrier gas other than N₂. The test results were evaluated by using the combustion temperature, the combustion position, the combustion state of unburnt char and diffusivity (mainly of pulverized coal) in the case where only pulverized coal was injected through a single tube as a standard, and the case where pulverized coal is injected through the inner tube of a double tube lance while a utility gas was injected through the outer tube of the double tube lance, the case where a utility gas was injected through the inner tube of the double tube lance while pulverized coal was injected through the outer tube of the double tube lance. The evaluation results were represented as follows: Δ; equivalent to the case where only pulverized coal was injected, ○; improved a little, ⊙; significantly improved.

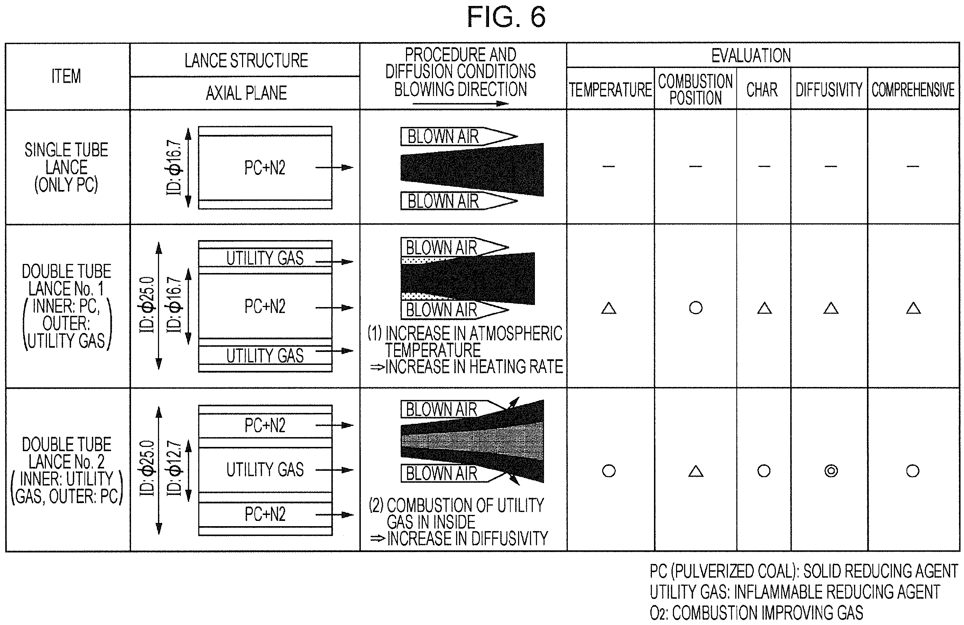

Fig. 6 illustrates the test results described above. Pulverized coal (PC in the figure) was injected with a carrier gas (nitrogen gas N₂ was used). As the figure indicates, it is clarified that in the case where pulverized coal was injected through the inner tube of the double tube lance while a utility gas was injected through the outer tube, although improvement in combustion position is recognized, no change is recognized regarding other items. This is thought to be because, although there is an increase in the heating rate of the pulverized coal due to the combustion heat of the utility gas which exists on the outside of the pulverized coal, which contacts O₂ earlier than the pulverized coal does and which quickly burns, since O₂ is expended in the combustion of the utility gas and there is a decrease in the amount of O₂ which is necessary for the combustion of the pulverized coal, a sufficient increase in combustion temperature cannot be achieved and the combustion state of unburnt char cannot be improved. On the other hand, in the case where a utility gas was injected through the inner tube of the double tube lance while pulverized coal was injected through the outer tube, although improvement in combustion temperature and the combustion state of unburnt char was recognized and significant improvement in diffusivity was recognized, no change in combustion position was recognized. This is thought to be because, although the diffusion of O₂ through the pulverized coal area which existed in the outer area into the utility gas which existed in the inner area took a long time, since an explosive diffusion occurs due to the combustion of the inflammable utility gas which existed in the inner area, there was an increase in the combustion temperature of the pulverized coal which was heated by the combustion heat of the utility gas and the combustion state of unburnt char were also improved.

The present inventors, on the basis of the test results described above, conducted investigations, in particular, in order to increase the combustion temperature in the case where pulverized coal is injected through the inner tube of a double tube lance while a utility gas is injected through the outer tube of a double tube lance and in the case where a utility gas is injected through the inner tube of a double tube lance while pulverized coal is injected through the outer tube of a double tube lance, and focused on the oxygen enrichment of blown air, that is, an oxygen excess ratio. Therefore, by using the combustion test apparatus described above, for example, in the case where pulverized coal is injected through the inner tube of a double tube lance while a utility gas is injected through the outer tube of a double tube lance, the combustion temperature and a combustion position were observed while an oxygen excess ratio was variously changed. In this case, an oxygen excess ratio is defined by the value which is derived by dividing the amount of oxygen in blown air by the amount of oxygen which is necessary to completely burn pulverized coal, and pulverized coal can be completely burnt in the case where the ratio is 1, and cannot be burnt in the case where the ratio is less than 1. An oxygen excess ratio in practical operation is represented as follows.

oxygen excess ratio = (the amount of oxygen which is contained in air, pure oxygen and a solid reducing agent which are blown through tuyeres and lances) / (the amount of oxygen which is necessary to burn carbon, hydrogen and sulfur which are contained in a solid reducing agent into CO₂, H₂O and SO₂)

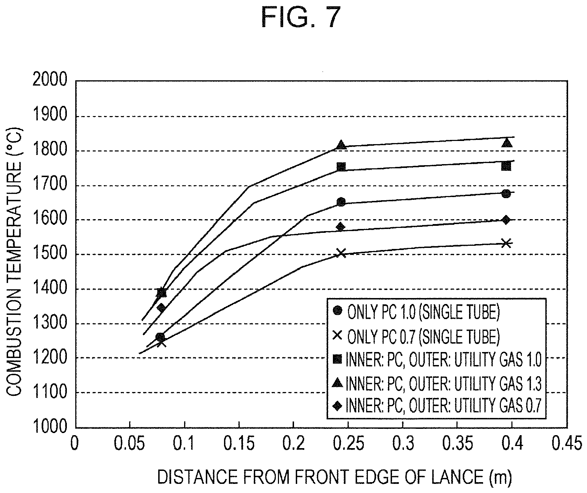

Fig. 7 illustrates the test results. As the figure illustrates, it is clarified that, in comparison to the case where only pulverized coal is injected through a single tube lance, for example, in the case where pulverized coal is injected through the inner tube of a double tube lance while a utility gas is injected through the outer tube of a double tube lance, when an oxygen excess ratio is 0.7 or more, there is an increase in combustion temperature at a position near to a lance in any cases. In particular, in the case where pulverized coal is injected through the inner tube of a double tube while a utility gas is injected through the outer tube of a double tube lance, when an oxygen excess ratio is 1 or more, there is an increase in combustion temperature at a position at any distance from a lance. Therefore, in the case where pulverized coal is injected through the inner tube of a double tube lance while a utility gas is injected through the outer tube of a double tube lance, the lower limit of an oxygen excess ratio is set to be 0.7 or more and the upper limit of an oxygen excess ratio is set to be 1.3 or less. Although further increase in combustion temperature is expected by increasing an oxygen excess ratio, the upper limit of an oxygen excess ratio is set to be 1.3 from the viewpoint of production cost of oxygen. It is more preferable that an oxygen excess ratio be from 0.9 to 1.2. Incidentally, it is thought that similar results can be obtained in the case where a utility gas is injected through the inner tube of a double tube lance while pulverized coal is injected through the outer tube of a double tube lance. Here, improvement in combustion temperature is an evidence of an increase in combustion amount, and there is a decrease in the amount of heaped fine powdery materials (the amount of powdery materials fed into a furnace) in front of a tuyere due to an increase in combustion amount of solid reducing agents which are injected into the blast furnace, which results in improvement in gas permeability in the blast furnace. In the case where heat balance is appropriate, it is possible to decrease the amount of charged coke (coke ratio) by the amount corresponding to the improvement in gas permeability, which results in a decrease in the specific consumption of reducing agents. In addition, although a utility gas is an example of an inflammable reducing agent, a natural gas (LNG), which mainly consists of methane and is equivalent to a utility gas as indicated in Table 2 below, may also be used.

**[Table 2]**

| Production Area | CH₄ Methane | C₂H₆ Ethane | C₃H₈ Propane | C₄H₁₀ Butane | C₅H₁₂ Pentane | Nitrogen | Total |
|---|---|---|---|---|---|---|---|
| Natural Gas A Alaska | 99.81 | 0.07 | 0 | 0 | 0 | 0.12 | 100.0 |
| Natural Gas B Brunei | 89.83 | 5.89 | 2.92 | 1.3 | 0.04 | 0.02 | 100.0 |
| Natural Gas C Abu Dhabi | 82.07 | 15.86 | 1.86 | 0.13 | 0 | 0.05 | 100.0 |
| Mean | 90.570 | 7.273 | 1.593 | 0.477 | 0.013 | 0.063 | 100.0 |

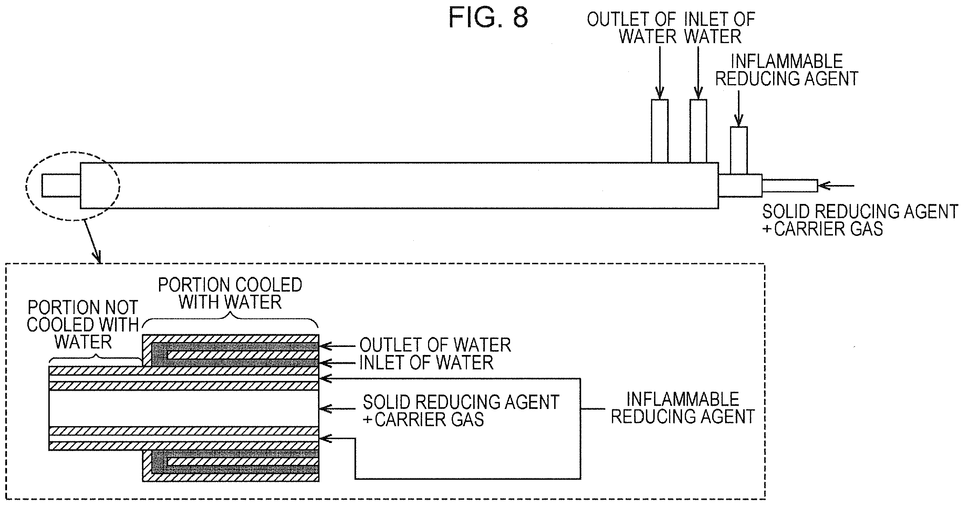

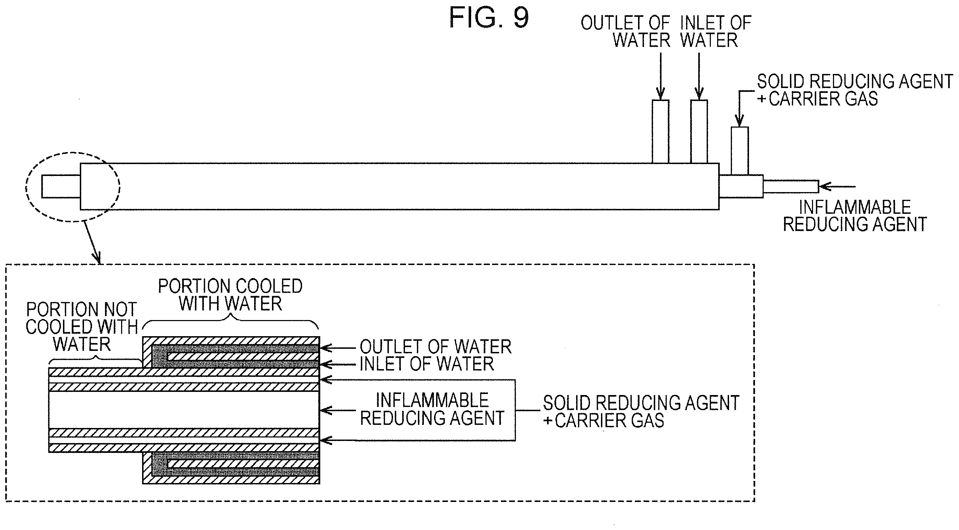

Incidentally, the outer tube of the double tube lance tends to be exposed to an atmosphere of a high temperature when the combustion temperature increases as described above. The double tube lance consist of, for example, stainless steel tubes. Although it is needless to say that the outer tube of the double tube lance is cooled with a water cooling system such as so-called a water jacket, the jacket cannot reach the front edge of the lance. Fig. 8 illustrates the conditions of a water jacket of a double tube lance, in the case where pulverized coal is injected through the inner tube of the double tube lance while a utility gas is injected through the outer tube. Fig. 9 illustrates the conditions of a water jacket of a double tube lance, in the case where a utility gas is injected through the inner tube of the double tube lance while pulverized coal is injected through the outer tube. It was found that the front edge portion of the outer tube of a double tube lance which, in particular, water cooling cannot reach as illustrated in Fig. 8 and Fig. 9 is deformed due to heat. In the case where the outer tube of a double tube lance is deformed, that is, bent, it is impossible to blow pulverized coal or a utility gas into a required position and there is difficulty in replacement of the lance which is an expendable item. In addition, it is also thought that the flow of pulverized coal is changed due to the bent lance so that the pulverized coal hits a tuyere, and there is concern that the tuyere may be damaged in this case. In the case where the outer tube of a double tube lance is bent, the space between the outer and inner tubes may be closed and gas flow through the outer tube may be stopped, and the outer tube of the double tube lance may be damaged due to melting in this case, and further, there may be a case where a blow pipe is broken. In the case where the lance is deformed or worn, it is impossible not only to achieve the combustion temperature described above but also to decrease the specific consumption of reducing agents.

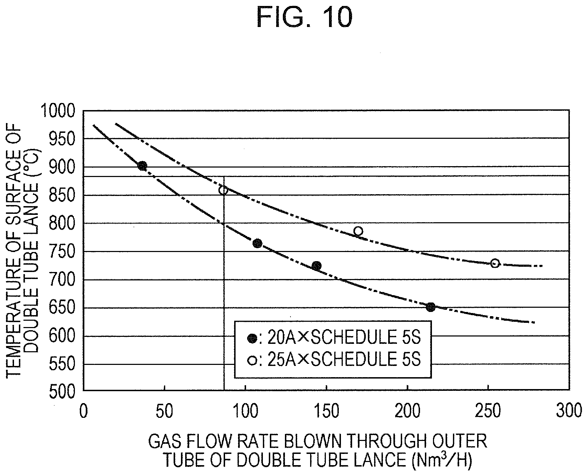

In order to cool an outer tube of a double tube lance which cannot be cooled with water, there is no other way but to dissipate heat through gases which are transferred through the inside of the lance. In the case where an outer tube of a double tube lance is cooled by using the dissipation of heat through the gases which flow inside the lance, it is thought that the flow rate of the gases have an influence on the temperature of the lance. Therefore, the present inventors observed the surface temperature of the lance while the flow rate of the gases which were injected through the outer tube of the double tube lance was variously changed. In this experiment, a utility gas was injected through the outer tube of the double tube lance, and pulverized coal was injected through the inner tube. The flow rate of the gases was adjusted by adding N₂ which is used as an inert gas to a utility gas which is injected through the outer tube of the double tube lance. Incidentally, as for N₂ to be used here, some of N₂ for a carrier gas which is used for the transfer of pulverized coal may be used. Fig. 10 illustrates the observation results.

Two kinds of steel tubes called 20A×Schedule5S and 25A×Schedule5S were used for the outer tube of the double tube lance. In addition, one kind of steel tube called 15A×Schedule90 was used for the inner tube of the double tube lance, and the surface temperature of the lance was observed while the total flow rate of N₂ and utility gas was variously changed. Here, "15A", "20A" and "25A" are nominal dimensions for the outer diameters of the steel tubes in accordance with JIS G 3459, and 15A represents an outer diameter of 21.7 mm, 20A represents an outer diameter of 27.2 mm and 25A represents an outer diameter of 34.0 mm. In addition, "Schedule" is a nominal dimension for the thickness of the steel tube in accordance with JIS G 3459, and Schedule5S represents 1.65 mm, 15A×Schedule90 represents 3.70 mm. It is practical that steel tubes of the dimensions equivalent to those of the two kinds of steel tubes described above are used as the outer tube of a double tube lance. In addition, 20A×Schedule90 (thickness: 3.90 mm) or 25A×Schedule90 (thickness: 4.5 mm) may be used. Incidentally, other than stainless steel tubes, carbon steel may be applied. In this case, the outer diameter of a steel tube is in accordance with JIS G 3452 and the thickness of a steel tube is in accordance with JIS G 3454.

As the figure illustrates with two-dot chain lines, the surface temperature of the lance of each size of the steel tube decreases nearly in inverse proportion to an increase in the total flow rate of the gases which are injected through the outer tube of the double tube lance. This is because the flow velocity of a gas varies even with the same flow rate depending on the size of the steel tube. In the case where steel tubes are used for a double tube lance, creep deformation occurs when the surface temperature of the double tube lance becomes higher than 880°C, which results in the double tube lance being bent. Therefore, in the case where a steel tube called 20A×Schedule5S or 25A×schedule5S is used for the outer tube of a double tube lance and the surface temperature of the double tube lance is 880°C or lower, the flow rate of gases injected through the outer tube is set to be 85 Nm³/h or more, and the flow velocity at the exit of the outer tube of the double tube lance is 20 m/sec or more in the case where these steel tubes are used for the outer tube of the double tube lance. Then, since, in the case where the flow rate of the gases injected through the outer tube of the double tube lance is 85 Nm³/h or more and the flow velocity at the exit of the outer tube of the double tube lance is 20 m/sec or more, the surface temperature of the outer tube of the double tube lance becomes 880°C or lower, the double tube lance is not deformed or bent. On the other hand, since, in the case where the total flow rate of the gases injected through the outer tube of the double tube lance is more than 800 Nm³/h or the flow velocity at the exit is more than 120 m/sec, it is not practical from the viewpoint of operation cost of the apparatus, the upper limit of the total flow rate of the gases injected through the outer tube of the double tube lance is set to be 800 Nm³/h and the upper limit of the flow velocity at the exit is set to be 120 m/sec. That is to say, in order to cool the outer tube of the double tube lance which cannot be cooled with water, the total flow rate of the gases injected through the outer tube of the double tube lance is set to be adjusted so that the flow velocity at the exit of the double tube lance is from 20 m/sec to 120 m/sec.

In the case of this double tube lance, the deformation (bending) of the double tube lance is prevented by adjusting the flow rate of the carrier gas of a solid reducing agent or an inflammable reducing agent which are injected through the outer tube of the double tube lance so that the flow velocity at the exit of the outer tube of the double tube lance is 20 m/sec or more, and, in accordance with this, the amount of solid reducing agents such as pulverized coal which are injected through the double tube lance is set to be from 50 kg to 300 kg per 1 ton of pig iron. That is to say, since there is a limitation on the lower limit of the amount of materials to be injected through a lance due to facility conditions, it is necessary to take measures such as closing some of tuyeres in the case where a injected reducing agent rate is excessively small, which results in there being a deviation in the circumferential direction due to coexisting of tuyeres through which reducing agents are injected and tuyeres through which reducing agents are not injected, which is not preferable for the steady operation of a blast furnace. Therefore, the amount of solid reducing agents is set to be 50 kg or more per 1 ton of pig iron. In addition, in the case where the injected reducing agent rate of solid reducing agents is excessively small, the relative amount of charged materials which are provided with heat through heat exchange between gases and the charged materials becomes large, which results in a decrease in the temperature of gases at the furnace top. In order to prevent the temperature of gases at the furnace top from becoming equal to a dewpoint or lower, the amount of solid reducing agents is again set to be 50 kg or more per 1 ton of pig iron, preferably 60 kg or more.

Moreover, there is the upper limit on the injected reducing agent rate due to the limitation of gas permeability from the viewpoint of operation with a low reducing agent rate, because a reducing agent rate for a solid reducing agent (coke) which is charged through the furnace top is decreased with an increase in the injected reducing agent rate of solid reducing agents, which results in a decrease in gas permeability, and, in the case where a total pressure loss (blown air pressure - furnace top pressure) exceeds the acceptable limit, it is impossible to decrease the reducing agent rate (for coke) even if the amount of the injected reducing agents is further increased, which results in steady operation being hampered or may result in operation itself becoming impossible. Also in order to protect furnace top devices, the amount of solid reducing agents is set to be 300 kg or less per 1 ton of pig iron.

In addition, 1 kg or more of inflammable reducing agents such as a utility gas and a natural gas (LNG) per 1 ton of pig iron is necessary from the viewpoint of achieving a high combustion temperature, and the upper limit is set to be 50 kg or less per 1 ton of pig iron in order to protect tuyeres and furnace top devices, preferably from 10 kg to 35 kg per 1 ton of pig iron.

By calculating from the values described above, the ratio of the amount of a solid reducing agent to the amount of an inflammable reducing agent (by mass%) becomes from 1 to 300, preferably from 1 to 180.

Moreover, the oxygen enrichment ratio of blown air is set to be from 2% to 10%, preferably from 2.5% to 8 %, in order to achieve the good combustion quality of solid reducing agents and inflammable reducing agents in the case where a double tube lance is used.

In addition, although the mean particle diameter of pulverized coal in practice is from 10 µm to 100 µm, it is preferable that, in the present invention, the mean particle diameter be from 20 µm to 50 µm in order to achieve a good combustion quality and in consideration of transportation from a lance and feeding to a lance. In the case where the mean particle diameter of pulverized coal is less than 20 µm, although a combustion quality is good, pulverized coal tends to get stuck in a lance when being transported (pneumatic transportation), and there is concern that the combustion quality of pulverized coal may be deteriorated in the case where the mean particle diameter of pulverized coal is more than 50 µm.

In addition, a injected solid reducing agent which mainly consists of pulverized coal and to which waste plastic, refuse derived fuel (RDF), organic resources (biomass) or waste materials are mixed may be used. In the case where the mixture is used, it is preferable that the ratio of the amount of pulverized coal to the total amount of the solid reducing agent be 80 mass% or more. That is to say, since heat quantity which is generated by reaction of waste plastic, refuse derived fuel (RDF), organic resources (biomass), waste materials or the like is different from that generated by pulverized coal, combustion state tend to become uneven in the case where their mixing ratios become close to that of pulverized coal, which tends to result in unsteady operation. In addition, since heat quantity which is generated by combustion reaction of waste plastic, refuse derived fuel (RDF), organic resources (biomass), waste materials or the like is less than that generated by pulverized coal, efficiency at which solid reducing agents which are charged through the furnace top are replaced with the injected solid reducing agents decreases in the case where a large amount of them are used to be injected. That is why it is preferable that the content of pulverized coal be 80 mass% or more.

Incidentally, waste plastic, refuse derived fuel (RDF), organic resources (biomass) or waste materials can be used by mixing with pulverized coal by grinding them into fine particles having a diameter of 6 mm or less, preferably 3 mm or less. Regarding their ratio to pulverized coal, they can be mixed with pulverized coal by making them join pulverized coal which is being transported with a carrier gas. They may be used by mixing with pulverized coal in advance.

Moreover, other than a utility gas or natural gas, propane gas, hydrogen and gases generated in a steel works such as a converter gas, a blast furnace gas and a coke oven gas may be used as inflammable reducing agents.

As described above, in the method for operating a blast furnace of the present embodiment, by injecting pulverized coal (solid reducing agent) 6 and a utility gas (inflammable reducing agent) 9 through a double tube lance 4 provided to a tuyere 3 and by setting the oxygen excess ratio of air blown to the tuyere 3 to be from 0.7 to 1.3, there is a significant increase in the temperature of the pulverized coal (solid reducing agent) 6 due to the utility gas (inflammable reducing agent) 9 which contacts O₂ contained in the blown air in first being burnt, which causes an increase in the heating rate of the pulverized coal (solid reducing agent) 6 and the pulverized coal 6 being sufficiently burnt. As a result, there is a significant increase in combustion temperature, which makes it possible to reduce the specific consumption of reducing agents. At the same time, it is possible to prevent the double tube lance 4 from being deformed due to the increasing temperature by setting the flow velocity at the exit of the outer tube of the double tube lance 4 to be from 20 m/sec to 120 m/sec.

In addition, by injecting the pulverized coal (solid reducing agent) 6 through the inner tube of the double tube lance 4 while the utility gas (inflammable reducing agent) 9 is injected through the outer tube of the double tube lance 4, the utility gas which contacts O₂ contained in the blown air in first is burnt, which results in a significant increase in the temperature of the pulverized coal (solid reducing agent) 6 which exist on the inner side of the utility gas (inflammable reducing agent) 9.

In addition, by injecting the utility gas (inflammable reducing agent) 9 through the inner tube of the double tube lance 4 while the pulverized coal (solid fuel) 6 is injected through the outer tube of the double tube lance 4, there is explosive diffusion of the pulverized coal (solid fuel) 6 due to the utility gas (inflammable fuel) 9 which exist on the inner side of the pulverized coal (solid fuel) 6 being burnt in first, and, at the same time, there is a significant increase in the temperature of the pulverized coal (solid fuel) 6 due to the combustion heat of the utility gas (inflammable fuel) 9.

In addition, in the example illustrated in Fig. 10, the deformation of the double tube lance 4 due to increased temperature can be prevented by setting the total flow rate of the gases which are injected through the outer tube of the double tube lance 4 to be from 85 Nm³/h to 800 Nm³/h or more.

### [Reference Signs List]

1: blast furnace, 2: blow pipe, 3: tuyere, 4: lance, 5: raceway, 6: pulverized coal (solid reducing agent), 7: coke, 8: char, 9: utility gas (inflammable reducing agent)

## Claims

1. A method for operating a blast furnace (1) in which an inflammable reducing agent (9) and a solid reducing agent (6) are injected through a lance (4) and a tuyere (3), the method comprising and being **characterized by**:
injecting the inflammable reducing agent and the solid reducing agent through a double tube lance (4), a flow velocity at an exit of an outer tube of the double tube lance being from 20 m/sec to 120 m/sec and an oxygen excess ratio of air blown to the tuyere being from 0.7 to 1.3, wherein
the oxygen excess ratio = (the amount of oxygen which is contained in air, pure oxygen and the solid reducing agent which are blown through tuyeres and lances) / (the amount of oxygen which is necessary to burn carbon, hydrogen and sulfur which are contained in the solid reducing agent into CO₂, H₂O and SO₂), and wherein
a) the solid reducing agent is injected through an inner tube of the double tube lance and the inflammable reducing agent is injected through the outer tube of the double tube lance; or
b) the inflammable reducing agent is injected through an inner tube of the double tube lance and the solid reducing agent is injected through the outer tube of the double tube lance.

2. The method according claim 1, wherein
the solid reducing agent is a pulverized coal.

3. The method according to claim 2, wherein
the solid reducing agent is injected in an amount in the range from 50 kg to 300 kg per 1 ton of pig iron.

4. The method according to claim 3, wherein
the solid reducing agent is injected in an amount in the range from 60 kg to 180 kg per 1 ton of pig iron.

5. The method according to any one of claims 2 to 4, wherein
the pulverized coal, which is used as the solid reducing agent, is mixed with waste plastic, a refuse derived fuel, an organic resource or a waste material.

6. The method according to claim 5, wherein
the pulverized coal, which is the solid reducing agent, is used by mixing with the waste plastic, a refuse derived fuel, an organic resource or a waste material with the content of the pulverized coal being 80 mass% or more.

7. The method according to any one of claims 1 to 6, wherein
the inflammable reducing agent is a utility gas, a natural gas, propane gas, hydrogen, a converter gas, a blast furnace gas or a coke oven gas.

8. The method according to claim 7, wherein
the inflammable reducing agent is injected in an amount in the range from 1 kg to 50 kg per 1 ton of pig iron.

9. The method according to claim 8, wherein
the inflammable reducing agent is injected in an amount in the range from 10 kg to 35 kg per 1 ton of pig iron.

## Patentansprüche

1. Verfahren zum Betreiben eines Hochofens (1), in dem ein entflammbares Reduziermittel (9) und ein festes Reduziermittel (6) durch eine Lanze (4) und eine Düse (3) injiziert werden, wobei das Verfahren beinhaltet und **gekennzeichnet ist durch**:
Injizieren des entflammbaren Reduktionsmittels und des festen Reduktionsmittels **durch** eine Doppelrohrlanze (4), wobei eine Fließgeschwindigkeit an einem Ausgang eines Außenrohres der Doppelrohrlanze von 20 m/sec bis 120 m/sec beträgt und ein Sauerstoffüberschussverhältnis von zur Düse geblasener Luft 0,7 bis 1,3 beträgt, wobei
das Sauerstoffüberschussverhältnis = (die Menge an Sauerstoff, die in der Luft enthalten ist, reiner Sauerstoff und das feste Reduktionsmittel, die **durch** Düsen und Lanzen geblasen werden) / (die Menge an Sauerstoff, der notwendig ist, um Kohlenstoff, Wasserstoff und Schwefel, die im festen Reduktionsmittel enthalten sind, zu CO₂, H₂O und SO₂ zu verbrennen), und wobei
a) das feste Reduktionsmittel **durch** ein Innenrohr der Doppelrohrlanze injiziert wird und das entflammbare Reduktionsmittel **durch** das Außenrohr der Doppelrohrlanze injiziert wird; oder
b) das entflammbare Reduktionsmittel **durch** ein Innenrohr der Doppelrohrlanze injiziert wird und das feste Reduktionsmittel **durch** das Außenrohr der Doppelrohrlanze injiziert wird.

2. Verfahren nach Anspruch 1, wobei
das feste Reduktionsmittel eine pulverisierte Kohle ist.

3. Verfahren nach Anspruch 2, wobei
das feste Reduktionsmittel in einer Menge im Bereich von 50 kg bis 300 kg pro 1 Tonne Roheisen injiziert wird.

4. Verfahren nach Anspruch 3, wobei das feste Reduktionsmittel in einer Menge im Bereich von 60 kg bis 180 kg pro 1 Tonne Roheisen injiziert wird.

5. Verfahren nach einem der Ansprüche 2 bis 4, wobei
die pulverisierte Kohle, die als das feste Reduktionsmittel benutzt wird, mit Abfallkunststoff, einem Ersatzbrennstoff, einer organischen Ressource oder einem Abfallmaterial gemischt ist.

6. Verfahren nach Anspruch 5, wobei
die pulverisierte Kohle, die das feste Reduktionsmittel ist, benutzt wird, indem sie mit dem Abfallkunststoff, einem Ersatzbrennstoff, einer organischen Ressource oder einem Abfallmaterial gemischt wird, wobei der Gehalt der pulverisierten Kohle 80 Massen-% oder mehr beträgt.

7. Verfahren nach einem der Ansprüche 1 bis 6, wobei
das entflammbare Reduktionsmittel ein Nutzgas, ein Erdgas, Propangas, Wasserstoff, ein Konvertergas, ein Hochofengas oder ein Koksofengas ist.

8. Verfahren nach Anspruch 7, wobei
das entflammbare Reduktionsmittel in einer Menge im Bereich von 1 kg bis 50 kg pro 1 Tonne Roheisen injiziert wird.

9. Verfahren nach Anspruch 8, wobei
das entflammbare Reduktionsmittel in einer Menge im Bereich von 10 kg bis 35 kg pro 1 Tonne Roheisen injiziert wird.

## Revendications

1. Procédé d'exploitation d'un haut fourneau (1) dans lequel un agent réducteur inflammable (9) et un agent réducteur solide (6) sont injectés à travers une lance (4) et une tuyère (3), le procédé comprenant et étant **caractérisé par** :
l'injection de l'agent réducteur inflammable et de l'agent réducteur solide à travers une lance à double tube (4), une vitesse d'écoulement à une sortie d'un tube extérieur de la lance à double tube étant de 20 m/s à 120 m/s et un rapport d'excédent d'oxygène de l'air insufflé dans la tuyère étant de 0,7 à 1,3, dans lequel
le rapport d'excédent d'oxygène = (la quantité d'oxygène qui est contenue dans l'air, d'oxygène pur et de l'agent réducteur solide qui sont insufflés à travers les tuyères et les lances) / (la quantité d'oxygène qui est nécessaire pour brûler le carbone, l'hydrogène et le soufre qui sont contenus dans l'agent réducteur solide en CO₂, H₂O et SO₂), et dans lequel
a) l'agent réducteur solide est injecté à travers un tube intérieur de la lance à double tube et l'agent réducteur inflammable est injecté à travers le tube extérieur de la lance à double tube ; ou
b) l'agent réducteur inflammable est injecté à travers un tube intérieur de la lance à double tube et l'agent réducteur solide est injecté à travers le tube extérieur de la lance à double tube.

2. Procédé selon la revendication 1, dans lequel
l'agent réducteur solide est un charbon pulvérisé.

3. Procédé selon la revendication 2, dans lequel
l'agent réducteur solide est injecté en une quantité dans la plage de 50 kg à 300 kg pour 1 tonne de fer brut.

4. Procédé selon la revendication 3, dans lequel
l'agent réducteur solide est injecté en une quantité dans la plage de 60 kg à 180 kg pour 1 tonne de fer brut.

5. Procédé selon l'une quelconque des revendications 2 à 4, dans lequel
le charbon pulvérisé, qui est utilisé en tant qu'agent réducteur solide, est mélangé à des déchets plastiques, un combustible dérivé de déchets, une ressource organique ou des déchets.

6. Procédé selon la revendication 5, dans lequel
le charbon pulvérisé, qui est l'agent réducteur solide, est utilisé par mélange aux déchets plastiques, à un combustible dérivé de déchets, à une ressource organique ou à des déchets avec la teneur du charbon pulvérisé étant de 80 % en masse ou plus.

7. Procédé selon l'une quelconque des revendications 1 à 6, dans lequel
l'agent réducteur inflammable est un gaz canalisé, un gaz naturel, un gaz de propane, de l'hydrogène, un gaz de convertisseur, un gaz de haut fourneau ou un gaz de four à coke.

8. Procédé selon la revendication 7, dans lequel
l'agent réducteur inflammable est injecté en une quantité dans la plage de 1 kg à 50 kg pour 1 tonne de fer brut.

9. Procédé selon la revendication 8, dans lequel
l'agent réducteur inflammable est injecté en une quantité dans la plage de 10 kg à 35 kg pour 1 tonne de fer brut.
